# EUROPEAN PATENT APPLICATION

(11) **EP 4 760 458 A1**
(43) Date of publication of application: **17.06.2026**
(21) Application number: 24307072.9
(22) Date of filing: 11.12.2024
(51) Int. Cl.: G06F 3/01

(54) **CONVERSION OF HAPTICS TO PSEUDO-HAPTICS**

(71) Applicant: InterDigital CE Patent Holdings, SAS, 75017 Paris (FR)
(72) Inventor: GUILLOTEL, Philippe, 35770 VERN SUR SEICHE (FR); GALVANE, Quentin, 35235 THORIGNE-FOUILLARD (FR); LECUYER, Gurvan, 35000 RENNES (FR)
(74) Representative: Vossius & Partner Patentanwälte Rechtsanwälte mbB

(57) **Abstract**

The systems, methods and devices are configured to use the notion of haptic illusions and convert haptics to at least one of audio, image and video. Generally, the conversions occur when an application does not have the appropriate haptic device, or even does not have any haptic device to play haptics. Instead of not playing the haptic tracks, a conversion is performed to at least one of audio and video to enable the system to provide the illusion of haptics feedback. These systems, methods and devices may be applicable in media applications, such as gaming, movies, music, XR, communication, for example.

## Description

### BACKGROUND

Often applications may not have access to an appropriate haptic device and therefore many haptic tracks fail to be played lessening the user experience.

### SUMMARY

The systems, methods and devices are configured to use the notion of haptic illusions and convert haptics to at least one of audio, image and video. Generally, the conversions occur when an application does not have the appropriate haptic device, or even does not have any haptic device to play haptics. Instead of not playing the haptic tracks, a conversion is performed to at least one of audio and video to enable the system to provide the illusion of haptics feedback. These systems, methods and devices may be applicable in media applications, such as gaming, movies, music, XR, communication, for example.

A method and codec for converting a haptic to a pseudo-haptic are disclosed. The method includes determining that an application does not have a haptic device associated with the haptic, converting a haptic track of the associated haptic to another track associated with an output configured with the application, and providing the converted track to a compatible output device.

The codec includes a haptic synthesizer operating to determine that an application does not have a haptic device associated with the haptic, convert a haptic track of the associated haptic to another track associated with an output configured with the application, and provide the converted track to a compatible output device.

The method and codec may further include a minimum sampling rate of the converted haptic track is determined based on input from a user. The method and codec may further include the converting the haptic track of the associated haptic to another track includes another track comprising at least one of a second haptic track, an audio track, and a video track. The method and codec may further include the compatible output device is at least one of a haptic device, speaker and display. The method and codec may further include the converting the haptic track of the associated haptic to another track includes determining a sound corresponding to the haptic effect in the haptic track. The method and codec may further include an audio signal of the determined sound is mixed with a signal of a media content. The method and codec may further include an audio signal of the determined sound is added using an additional audio channel. The method and codec may further include the converting of the haptic track includes translating a haptic signal of the haptic track to an audio signal. The method and codec may further include the converting of the haptic track includes associating a haptic signal of the haptic track to an image effect in a library of visual metaphors. The method and codec may further include the image effect is matched in duration and start time with the haptic signal by adapting an image frame rate. The method and codec may further include the converting of the haptic track includes displaying the haptic signal of the haptic track as a visual overlay. The method and codec may further include the visual overlay is a drawing of the haptic signal. The method and codec may further include the visual overlay includes an icon of the haptic signal added based on a semantic of an effect. The method and codec may further include the visual overlay includes a textual representation of the haptic signal based on a semantic of an effect.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 illustrates a moving picture experts' group (MPEG) haptics data structure;
FIG. 2 illustrates a haptic signal (bottom) and the decomposition in two frequency bands (top);
FIG. 3 illustrates a haptic encoder architecture according to embodiments of the present invention;
FIG. 4 illustrates a method that may be performed within haptic codec architecture to covert the haptic effect to an audio or video effect;
FIG. 5 illustrates a method of replacing a haptic effect with an audio signal reflecting the haptic effect;
FIG. 6 illustrates a pictorial representation of the conversion from an audio signal to a haptic signal;
FIG. 7 illustrates a set of synthetic basic waveforms that may be utilized to create sound or haptic effects;
FIG. 8 illustrates a plot representing an example format signal representing a representative haptic effect of an earthquake;
FIG. 9 illustrates a plot representing an example format signal representing a representative haptic effect of an explosion;
FIG. 10 illustrates a plot representing an example format signal representing a representative haptic effect of a bicycle;
FIG. 11 illustrates a plot representing an example format signal representing a representative haptic effect of a horse trot;
FIG. 12 illustrates a plot representing an example format signal representing a representative haptic effect of a horse canter;
FIG. 13 illustrates a plot representing an example format signal representing a representative haptic effect of a click;
FIG. 14 illustrates a method of translating a haptic signal to an audio signal;
FIG. 15 illustrates a diagram for performing amplitude modulation of an input low frequency haptic signal to a higher frequency audio signal;
FIG. 16 illustrates a method of replacing a haptic effect with a visual effect;
FIG. 17 illustrates a method of displaying a haptic signal as a visual overlay;
FIG. 18 illustrates an image depicting a scene with a signal drawn to show the haptic signal on the image of an earthquake;
FIG. 19 illustrates an image depicting a scene with a type/semantic of the effect provided in the image to illustrate the effect of an earthquake; and
FIG. 20 illustrates an image depicting a scene with a type/semantic of the effect provided in the image to illustrate the effect of an earthquake.

### DETAILED DESCRIPTION

The systems, methods and devices are configured to use the notion of haptic illusions and convert haptics to at least one of audio, image and video. Generally, the conversions occur when an application does not have the appropriate haptic device, or even does not have any haptic device to play haptics. Instead of not playing the haptic tracks, a conversion is performed to at least one of audio and video to enable the system to provide the illusion of haptics feedback. These systems, methods and devices may be applicable in media applications, such as gaming, movies, music, XR, communication, for example.

A method and codec for converting a haptic to a pseudo-haptic are disclosed. The method includes determining that an application does not have a haptic device associated with the haptic, converting a haptic track of the associated haptic to another track associated with an output configured with the application, and providing the converted track to a compatible output device.

The codec includes a haptic synthesizer operating to determine that an application does not have a haptic device associated with the haptic, convert a haptic track of the associated haptic to another track associated with an output configured with the application, and provide the converted track to a compatible output device.

The method and codec may further include a minimum sampling rate of the converted haptic track is determined based on input from a user. The method and codec may further include the converting the haptic track of the associated haptic to another track includes another track comprising at least one of a second haptic track, an audio track, and a video track. The method and codec may further include the compatible output device is at least one of a haptic device, speaker and display. The method and codec may further include the converting the haptic track of the associated haptic to another track includes determining a sound corresponding to the haptic effect in the haptic track. The method and codec may further include an audio signal of the determined sound is mixed with a signal of a media content. The method and codec may further include an audio signal of the determined sound is added using an additional audio channel. The method and codec may further include the converting of the haptic track includes translating a haptic signal of the haptic track to an audio signal. The method and codec may further include the converting of the haptic track includes associating a haptic signal of the haptic track to an image effect in a library of visual metaphors. The method and codec may further include the image effect is matched in duration and start time with the haptic signal by adapting an image frame rate. The method and codec may further include the converting of the haptic track includes displaying the haptic signal of the haptic track as a visual overlay. The method and codec may further include the visual overlay is a drawing of the haptic signal. The method and codec may further include the visual overlay includes an icon of the haptic signal added based on a semantic of an effect. The method and codec may further include the visual overlay includes a textual representation of the haptic signal based on a semantic of an effect.

Haptics generally refers to the sense of touch, and is generally divided into several distinct channels of sensory experience including kinesthetic, cutaneous and proprioception. Kinesthesia generally refers to the sensation of positions, velocities, forces and constraints that arises from the muscle spindles and tendons. Kinesthesia is related to force feedback devices or pseudo-haptic feedback (pulse oscillations). Kinesthesia includes specialized cells like mechanoreceptors, muscles spindles and tendons, for example, force feedback devices, robotic arms, skeletons and the like. Cutaneous includes tactile features referring to physical contact with the skin surface, which may include specialized cells such mechanoreceptors and thermoreceptors, for example, as well as, thermal (peltier, heat), texture (pin array, piezoelectric elements, vibratory pin array, electrode array), vibration/contact (solenoid, piezoelectric elements, motor with eccentric mass, audio speakers), pressure (airjet, ultra sound, smart metal), and the like. Proprioception may be considered as part of the kinesthetic sensation or differently since it relates to motion. Proprioception generally includes motion and relates to the sense of the relative position of neighboring parts of the body and strength of effort employed in movement. Proprioception may be linked to the vestibular system, and may include muscles spindles, tendons, especially the Golgi tendon organ, and joints. Proprioception may be linked with motion simulation such as a motion platform and vestibular stimulation.

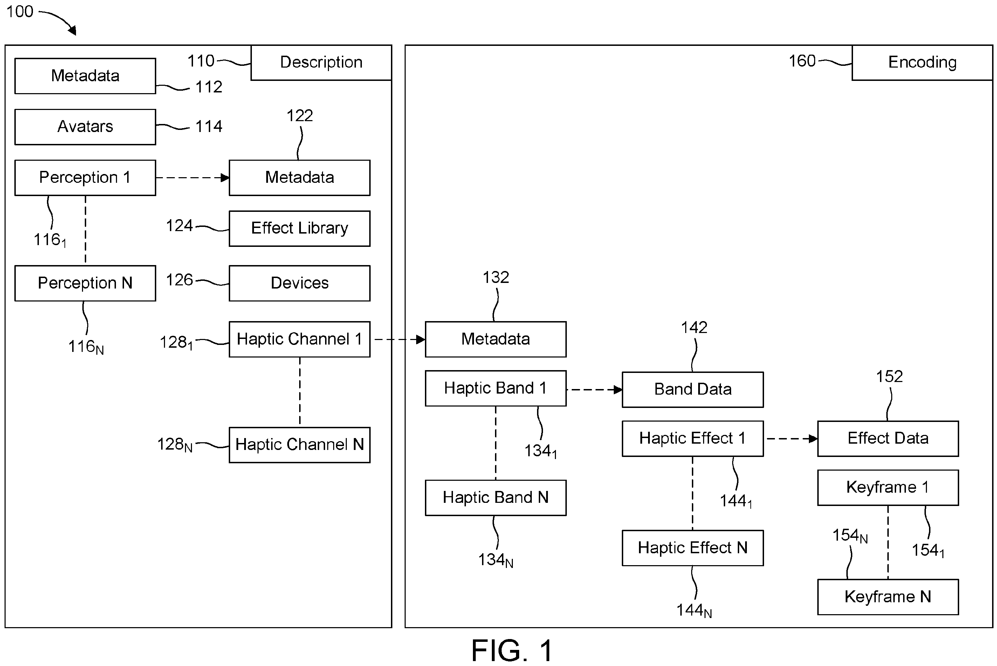

FIG. 1 illustrates a moving picture experts' group (MPEG) haptics data structure 100. Data structure 100 of the format follows a hierarchical organization as illustrated in FIG. 1. The file format is divided into a first portion identified as description 110 and a second portion identified as encoding 160. Generally, description 110 includes the haptic information described in metadata and encoding 160 includes the haptic information in the data itself. Within description 110 data structure 100 includes high-level metadata information 112 regarding the overall haptic experience defined in the file. Data structure 100 provides a list of avatars 114 (i.e., body representation) later referenced in the file to specify the desired location of haptic stimuli on the body. The haptic data within the data structure 100 is described through a plurality of perceptions 116 (individually identified as perceptions 116₁ through 116_{N} collectively referred to as plurality of perceptions 116). Plurality of perceptions 116 each correspond to haptic signals associated with specific perception modalities (i.e., vibration, force, position, velocity, temperature, ...).

Each perception in the plurality of perceptions 116 includes metadata 122, an effect library 124, devices 126, and a plurality of haptic channels 128 (individually identified as haptic channels 128₁ through 128_{N} collectively referred to as plurality of haptic channels 128). Within plurality of haptic channels 128, the data is decomposed in frequency haptic bands 134 (individually identified as haptic bands 134₁ through 134_{N} collectively referred to as haptic bands 134) and metadata 132. Each haptic band 134 defines part of the signal in a given frequency range. The haptic band 134 includes band data 142 and a plurality of haptic effects 144 (individually identified as haptic effects 144₁ through 144_{N} collectively referred to as plurality of haptic effects 144). Each haptic effect 144 includes effect data 152 and a plurality of keyframes 154 (individually identified as keyframes 154₁ through 154_{N} collectively referred to as plurality of keyframes 154). The haptic signal in a track can then be reconstructed by combining the data in the different bands.

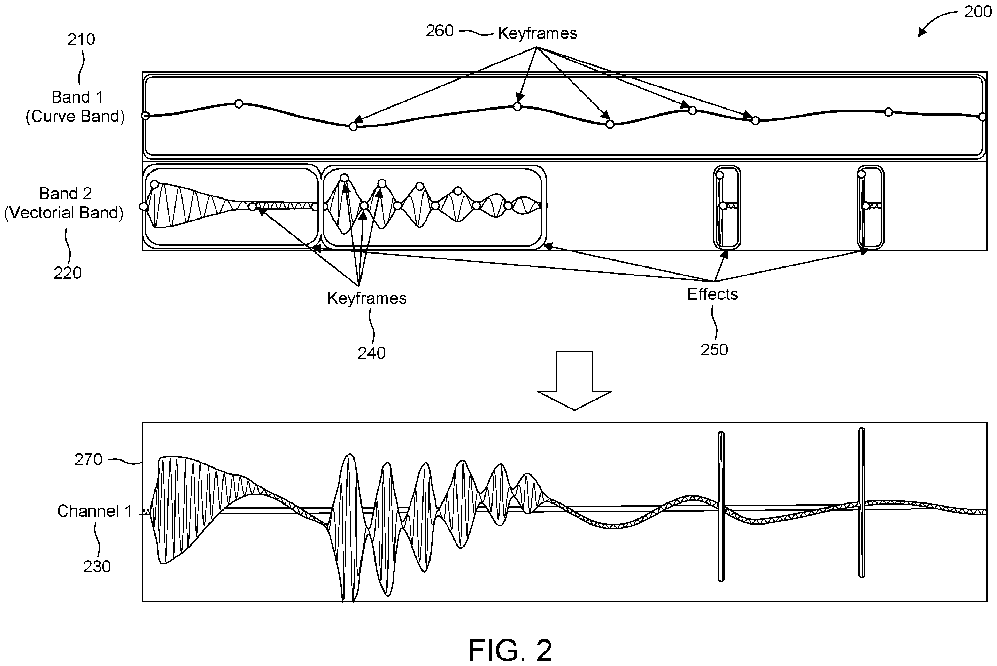

FIG. 2 illustrates a depiction 200 of a haptic signal 270 and the decomposition in two frequency bands 210, 220. Specifically, FIG. 2 illustrates how a haptic signal 270 is decomposed in two frequency bands (Band 1 210 and Band 2 220). As illustrated, band 1 210 is a low frequency band and band 2 220 is a high frequency band. By adding the high frequency band of band 2 220 and low frequency band of band 1 210, the original signal on channel 1 230 can be reconstructed in haptic signal 270 on channel 1 230.

Four types of haptic bands may be used including transient bands, curve bands, vectorial wave bands and wavelet bands. Each band (illustrated as band 1 210 and band 2 220) is composed of a series of "effects" 250 that are each defined by a list of "keyframes" 240, 260. The data contained in effects 250 and keyframes 240, 260 is interpreted differently for different types of haptic bands and encoding modalities.

Specifically, in FIG. 2, band 1 210 is a curve band that includes keyframes 260 within the low frequency curve of the curve band. Each effect stores a set of keyframes 260 defining a position and an amplitude. Keyframes 260 represent the control points of the curve of band 1 210.

Band 2 220 is a vectorial band that includes a series of higher frequency signals using frequency modulation envelops. Band 2 220 includes keyframes 240 and effects 250. Each effect 250 respectively stores a set of keyframes 240 defining a position, an amplitude and a frequency.

In an example, for a transient band, each effect may store a set of keyframes defining a position, an amplitude, and a frequency. A keyframe represents a transient event in such a configuration.

In a curve band, for example, each effect stores a set of keyframes defining a position and an amplitude. The keyframes represent the control points of the curve. The type of interpolation function (i.e., cubic or linear) used to generate the band may be specified in the metadata of the band.

For vectorial wave bands, for example, the effect stores a set of keyframes defining a position, an amplitude and a frequency. For wavelet bands, for example, the effect stores the contents of one wavelet block binary stream.

This MPEG format allows haptics to be configured either as a signal, such as time series of samples, or through a parametric description of a haptic effect. The signal is played back directly by the device, such as a sinusoidal signal sent to a vibrotactile device, for example, or through a synthesizer to convert the parametric description to a signal. The MPEG format includes metadata to describe the expected rendering and/or device properties and localization of the haptic effect on the user body.

Pseudo-haptics refers to the idea that it is possible to trigger the brain with some illusions of haptic sensations. For instance, it is possible to create the sensation of attraction, with a pulse impact in a direction to give the feeling of being pushed or pulled in the direction of the device.

Another example of a haptic sensation is friction based on visual cues with a special mouse where the speed of the cursor in the image is changed to simulate the friction. Since the cursor speed is different from the mouse movement, the user has the feeling that something is slowing or accelerating the cursor as if there is some friction.

Another example of a haptic sensation is a virtual hand put on an air flow. The real hand is fixed and the rendered virtual hand is moved as if the air flow pushes it. The user may perceive the impression that their hand is being pushed by the air flow.

Another example is to provide the sensation of friction when moving by using the cursor and mouse in a slow fashion with the cursor.

Other perceptive illusions of a haptic sensation may be induced to create the illusion of self-motion. When stationary observers are exposed to a large visual stimulus, the user may experience an illusion of self-motion called "vection". This is a well-known illusion in the art, which is typically studied using moving dots in various directions at different speeds. Vection may be linear or circular. Similarly, it has been shown that different vibrators put on a person's arm that are stimulated successively may give the perception to the user of a rabbit walking in the person's arm.

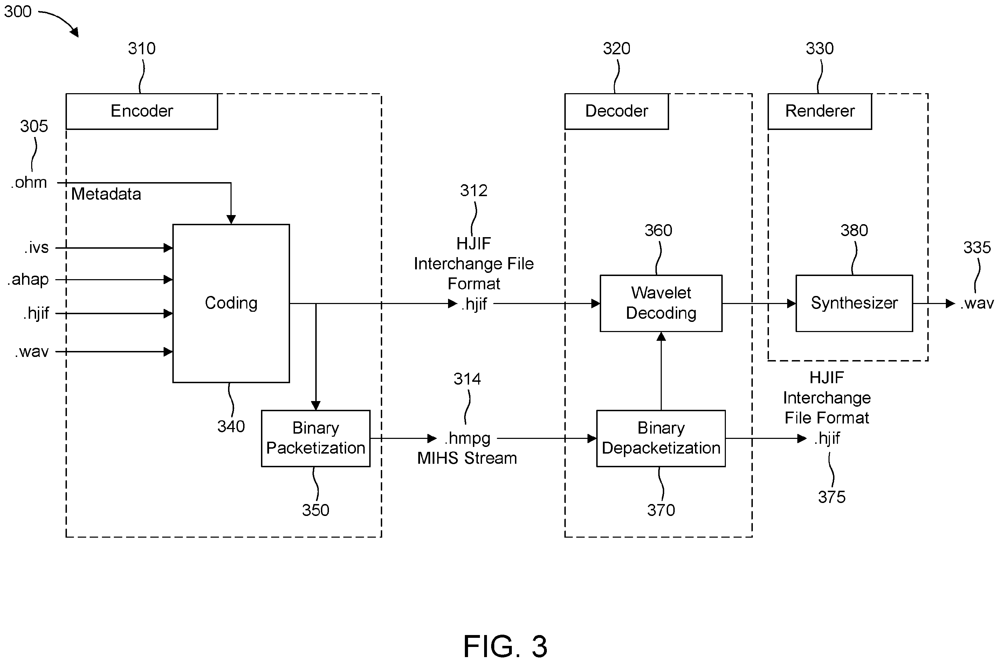

FIG. 3 illustrates a haptic codec architecture 300 according to embodiments of the present invention. The encoded signal may be exported either as a JSON (human readable) interchange format or as a compressed binary distribution format. Architecture 300 includes at a high level an encoder 310, decoder 320 and a renderer 330. Encoder 310 includes the coding 340 of inputs 305 for an output in an interchange file format 312, and as necessary the binary packetization 350 of the signal in a stream format 314. As is understood, the interchange file format 312 may include HJIF (.hjif) and the streaming format 314 may include an MIHS stream (.hmpg). The signals output from the encoder 310 are received in the decoder 320 where wavelet decoding 360 may be performed in the interchange file format 312 and binary depacketization 370 may be performed on the stream format 314. The binary depacketization 370 may then output an interchange file format 375 that may be in HJIF (.hjif), for example. The wavelet decoded 360 signal may be input to the renderer 330 utilizing a synthesizer 380 that provides an output 335. Output 335 from synthesizer 380 may take the form of a .wav file for example.

The encoding process may take an input 305 either descriptive haptics files (.IVS and .AHAP) or waveform PCM files (.wav). The encoding 340 of these two types of file formats follows two distinct approaches. For descriptive input files, the encoder 310 first analyzes the data and then transcodes the data directly to the MPEG format. For waveform signals, the data is processed using more common signal analysis methods to generate keyframes and either interpolate between keyframes or use wavelet coding (based on SPITH) to generate a binary encoded stream.

The present systems and method are configured to utilize haptic illusions to convert haptics to at least one of audio, image and video. The present systems and method may be utilized when the application does not have the appropriate haptic device, or when there is no haptic device to play haptics. The present systems and methods enable a conversion at least one of audio, image and video to enable the haptic to be provided via the illusion of haptics feedback. The present systems and methods may be used to enhance/highlight haptic effects when the haptic effect is played on a haptic device.

There are different types of haptic effects including ambient effects, contextual effects, interactions and dynamic controls and physical properties. Ambient effects include effects related to the context/environment, such as rain falling on the user, or an earthquake or explosion, for example. Contextual effects include effects directly related to an action, such as a vehicle approaching from a particular direction, or an incoming projectile touching the user. These contextual effects may also include camera motion. Interactions and dynamic controls includes clicks and controllers triggered due to a user action and may be used especially for gaming and VR applications. Physical properties include a physical property of an object, such as roughness, relief, hardness, temperature, for example.

Additionally, other relevant distinguished effects include egocentric including the impact on a user following an event, allocentric including the result of a user action, diegetic including linked to the action and the feeling by the audience and the character, and non-diegetic including the audience only and narrator effect.

Understanding the haptic effects has an impact on the haptic effect is converted to an audio or video effect.

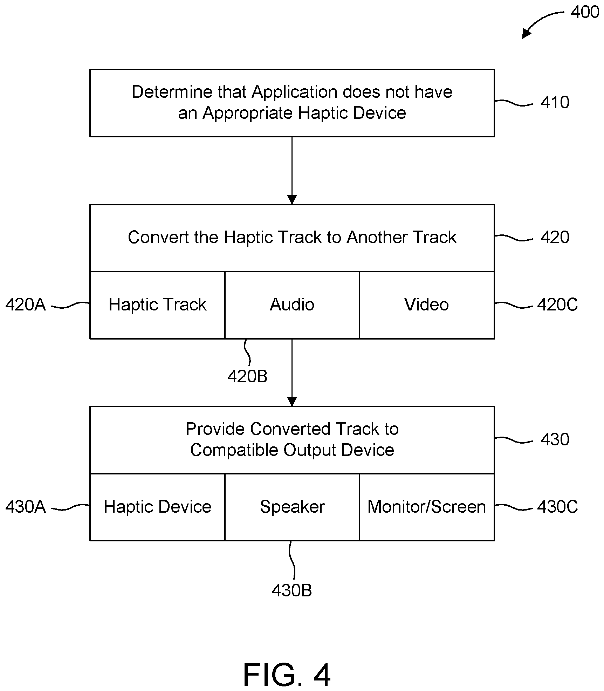

FIG. 4 illustrates a method 400 that may be performed within haptic codec architecture 300 to convert the haptic effect to an audio or video effect. At 410, method 400 includes determining that an application does not have access to an appropriate haptic device. At 420, method 400 includes converting the haptic track without the appropriate haptic device to another track, such as another supported haptic track 420A, an audio signal 420B, and/or a video signal 420C. At 430, method 400 includes providing the converted track to a compatible output device, such as a supported haptic device 430A, a speaker 430B, and/or a monitor or display 430C.

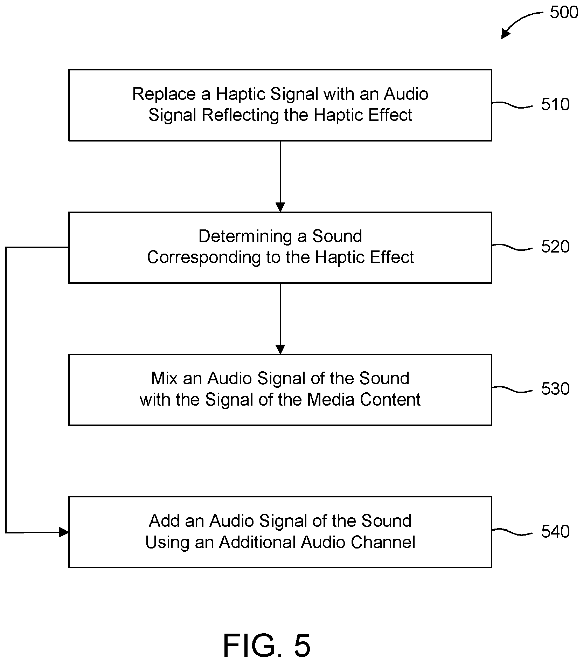

FIG. 5 illustrates a method 500 of replacing a haptic effect with an audio signal reflecting the haptic effect. Method 500 includes replacing a haptic signal with an audio signal reflecting the haptic effect at 510. At 520, method 500 includes determining a sound corresponding to the haptic effect. At 530, method 500 includes mixing an audio signal of the sound with the signal of the media content. Alternatively, or additionally to the mixing at 530, at 540, method 500 includes adding an audio signal of the sound using an additional audio channel.

The replacement of the haptic signal with an audio signal according to method 500 may include embedding the audio signal with the MPEG haptics format information and providing a link to an external option to find or define the audio signal. For example, the external link may be to a haptic effect where the audio sound is provided or define, may be a link to an audio file itself, or may provide both forms in an audio file and a haptic effect. As is understood, the haptic effect may be defined in a library. Each haptic effect may also contain semantic information that describes the haptic content (e.g., explosion, gun, car engine, ...). This semantic information may be used to create an audio file or associate the haptic file with an existing audio file matching the semantic. A mapping may be provided to map each effect to a sound.

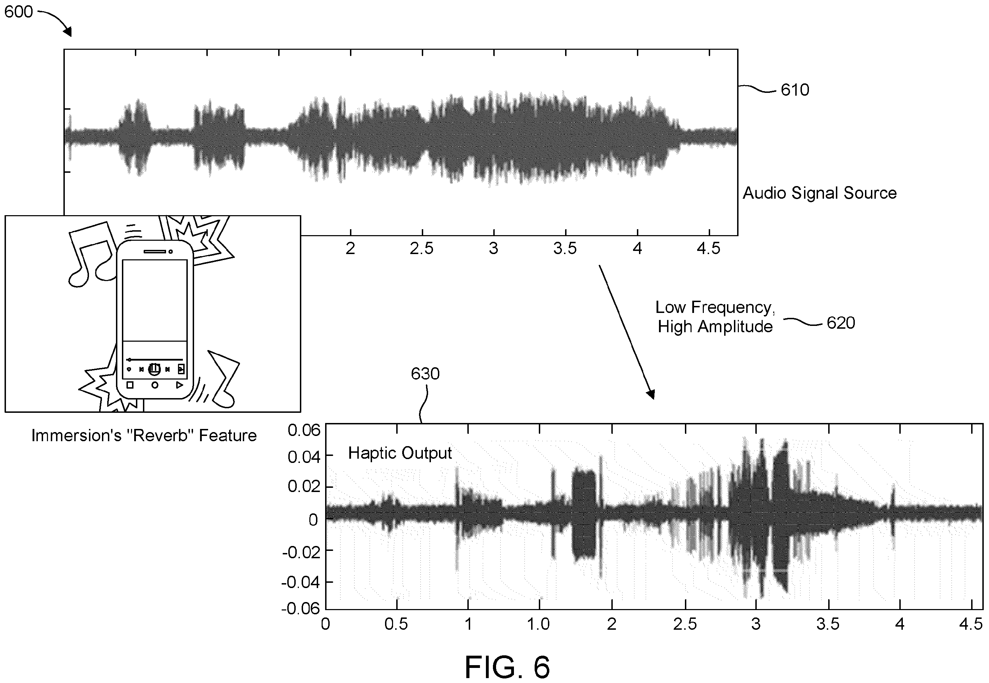

Assuming the semantic of the haptic effect is known, for instance using the MPEG haptics format, then a sound corresponding to the effect can be created and mixed with the audio signal of the media content or added in an additional audio channel as set forth in method 500. In an example, the sounds corresponding to the effect may be associated using a library of haptic effects with a sound related to the effect (i.e., a library of sound effects). By using the library of sound effects, there is no need to extract all channels and understand the channel/perception structure of the effect, for example. An extension of the existing MPEG Haptic standard may be provided include the associated sound effect with the haptic library. For example, an earthquake, explosion or rain sounds may be captured as illustrated in FIG. 6 or synthesized and made available at the receiver side to replace the haptic effect as a sound effect.

FIG. 6 illustrates a pictorial representation 600 of the conversion from an audio signal to a haptic signal. An audio signal source is represented in plot 610. The signal is an audio recording of 4.5 seconds with three distinct high volume parts separated by short low volume segments. A low frequency, high amplitude 620 transformation of the audio signal source occurs to provide the haptic out plot 630. The haptic output of 4.5 seconds that includes several low intensity segments corresponding to the low volume parts of the audio signal and multiple higher intensity segments with amplitude variations.

The duration of the original haptic effect (available in the MPEG format) is decoded to render the associated sound effect during the same duration. The sound effect may be clipped if the sound effect longer than the haptic output, or repeated if the sound effect is shorter than the haptic output in order to lengthen the sound effect up to the duration of the haptic output. This shortening or lengthening technique may apply for other effects or interactions (for example, a click, a push button, etc.) where a sound is represented. The technique may also represent physical properties of objects, i.e. it is always possible to record the sound of roughness when moving a pen on a particular surface or any other property of this surface. The sounds may mimic this translation with techniques used for special effects (FX) in the cinema industry, where sound designers are able to create a sound that sound like the expected event. This pictorial representation 600 provides an example of typical waveforms to create signals:

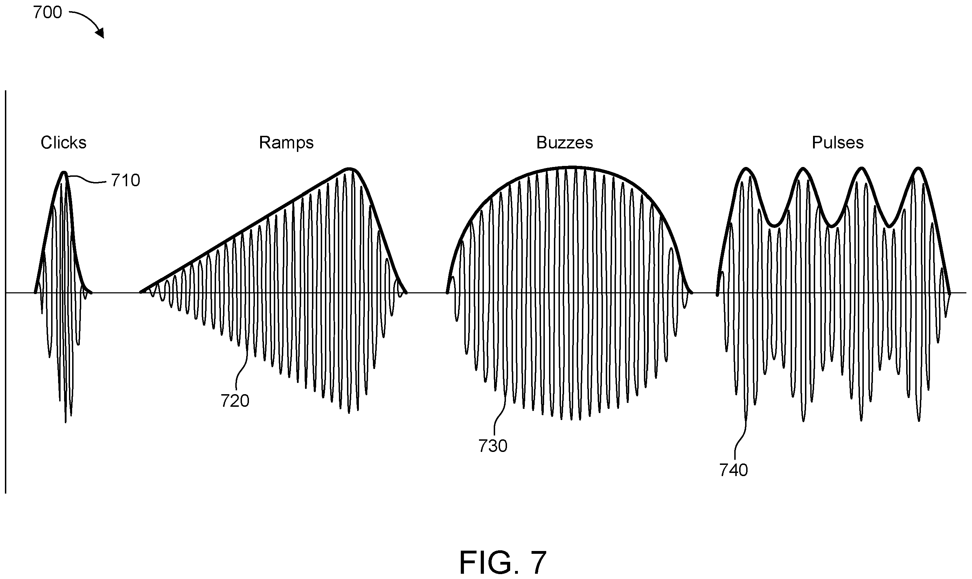

FIG. 7 illustrates a set of synthetic basic waveforms 700 that may be utilized to create sound or haptic effects. By way of example, waveforms such as clicks 710, ramps 720, buzzes 730, and pulses 740 may be used, alone or on combination with one another. By way of example,. clicks 710 may be used for providing UI haptic feedback on a phone after clicking a button, ramps 720 may be used for providing UI haptic feedback for indicating the progress of a process, buzzes 730 may be used for providing haptic feedback corresponding to a notification on a phone, and pulses 740 may be used for providing haptic feedback indicating an incoming call on a phone.

In conjunction with the waveforms 700 of FIG. 7, Table 1 provides a sound (or other captured signal) is stored in a file, such as a mp3 file or other audio format, for example, and the associated haptic effect that may be represented using the signal. For example, in providing a visual effect, a creative aspect may be provided to an application developer and an interactive visual effect may be provided. In one example, a table of effect mapping the haptic effect to a visual effect may be used as provided in table 1. Alternatively, or additionally, the haptic effect to visual effect mapping may be provided at the application level. As would be understood by those possessing an ordinary skill in the art, when a sound is not representative of the haptic effect, the sound may be ignored (not replaced) or replaced by the closest sound, such as in the case of cinema special effects.

**Table 1:Illustrates An Exemplary List Of Haptic Effects Associated Sound Effect And Example Signals**

| Haptic effect | Sound effect | Example signal |
|---|---|---|
| earthquake | seismogram.mp3 | Represented in FIG. 8. |
| explosion | audio-explosion.mp3 | Represented in FIG. 9. |
| bicycle | bicycle-Yaccelerometer.mp3 | Represented in FIG. 10. |
| horse trot | horseTrot-Yaccelerometer.mp3 | Represented in FIG. 11. |
| horse canter | horseCanter-Yaccelerometer.mp3 | Represented in FIG. 12. |
| click | mouseClick.mp3 | Represented in FIG. 13. |
| ... | ... | |

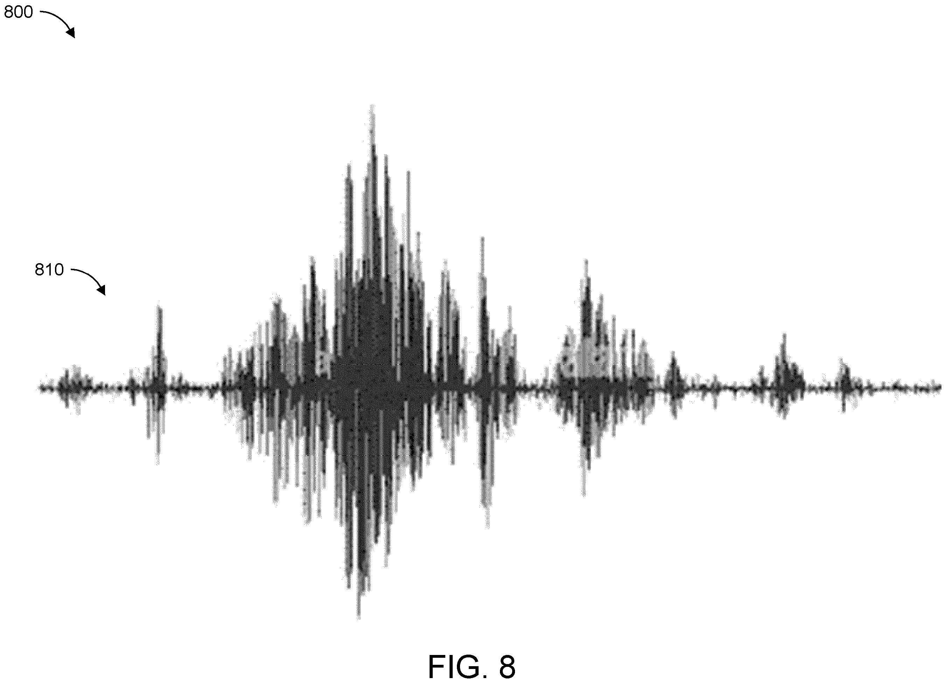

FIG. 8 illustrates a plot 800 representing an example format signal 810 representing a representative haptic effect of an earthquake. As is illustrated in FIG. 8, signal 810 includes a number of amplitude spikes and groups of activity in the signal.

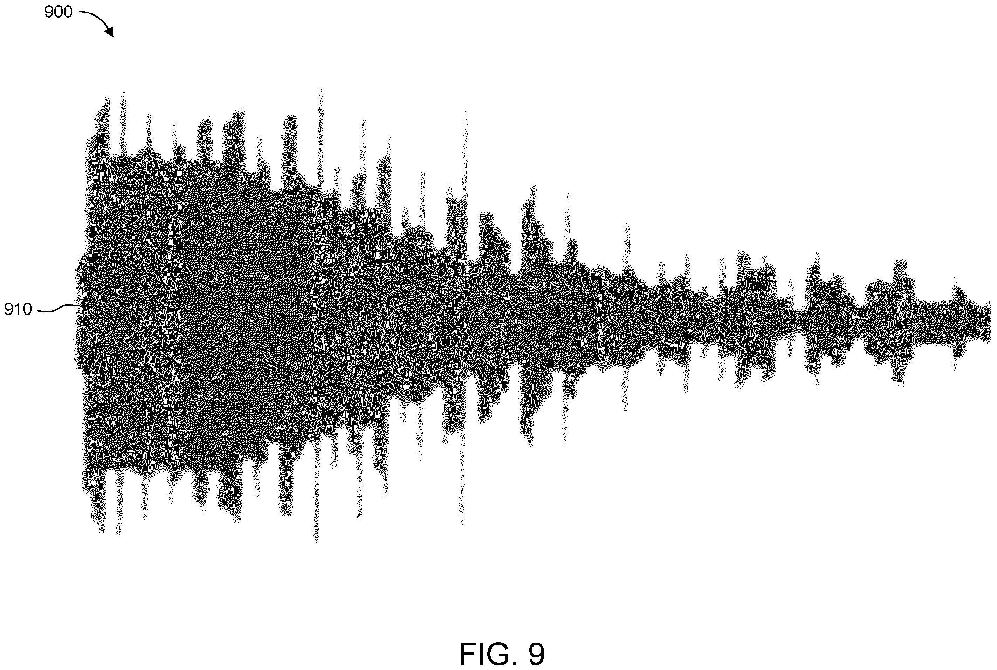

FIG. 9 illustrates a plot 900 representing an example format signal 910 representing a representative haptic effect of an explosion. As can be seen in FIG. 9, signal 910 includes an initial amplitude envelop is seen which dampens as time moves on.

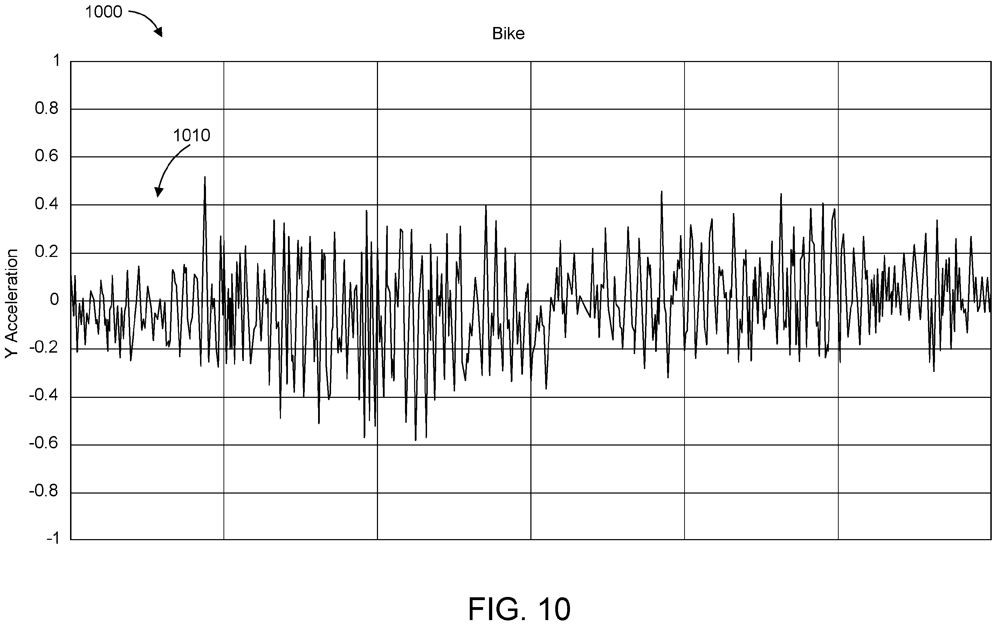

FIG. 10 illustrates a plot 1000 representing an example format signal 1010 representing a representative haptic effect of a bicycle. As can be seen in FIG. 10, signal 1010 includes random variations in amplitudes similar to a noise signal expected from a bike moving on an uneven surface.

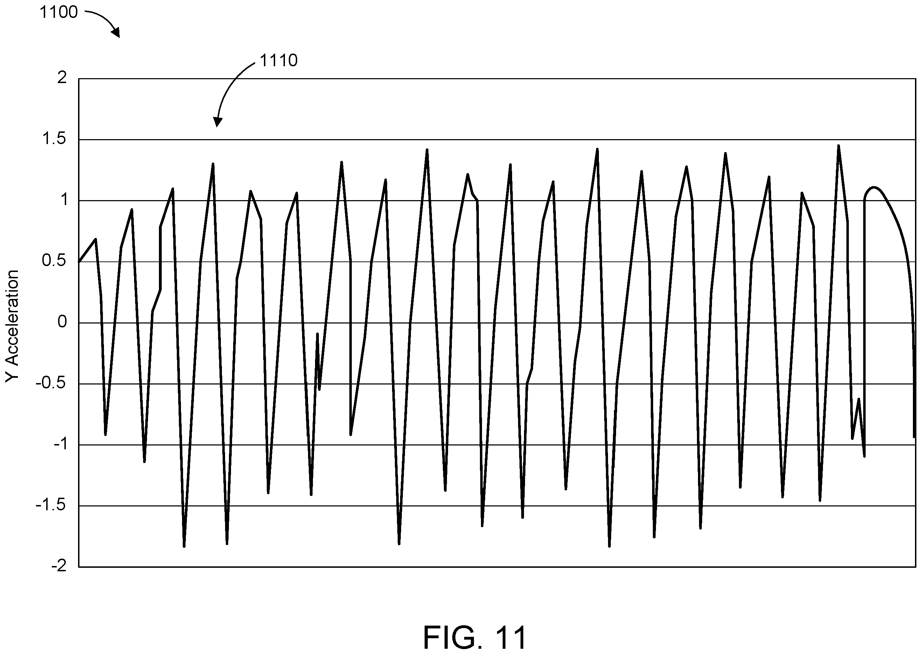

FIG. 11 illustrates a plot 1100 representing an example format signal 1110 representing a representative haptic effect of a horse trot. As can be seen in FIG. 11, signal 1110 includes a repetition that is expected from the horse hooves on the ground.

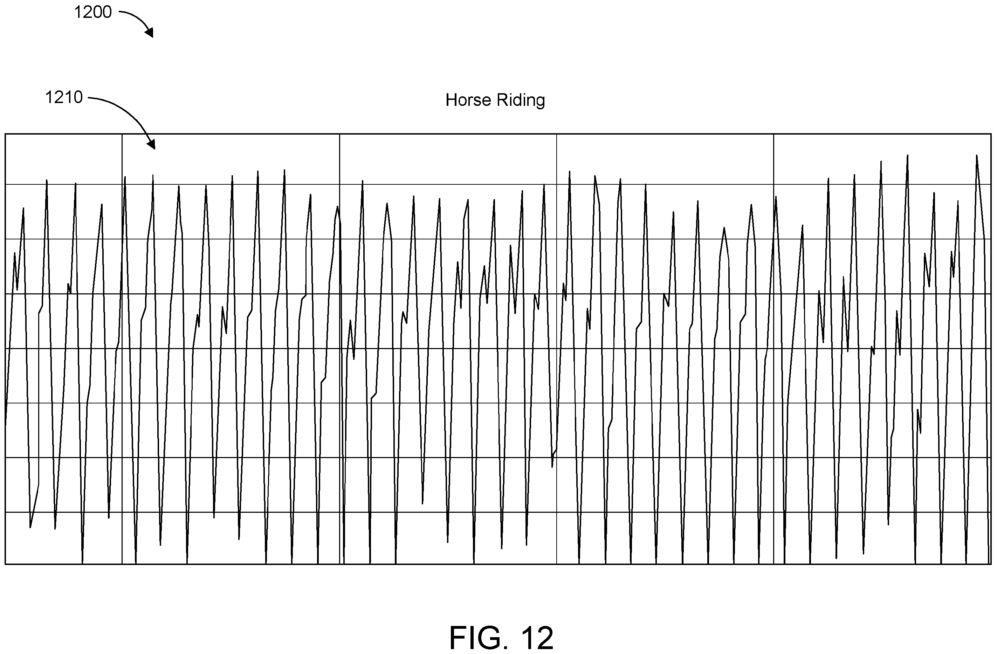

FIG. 12 illustrates a plot 1200 representing an example format signal 1210 representing a representative haptic effect of a horse canter. As can be seen in FIG. 12, signal 1210,much like signal 1110, include a repetition expected from the horse hooves on the ground.

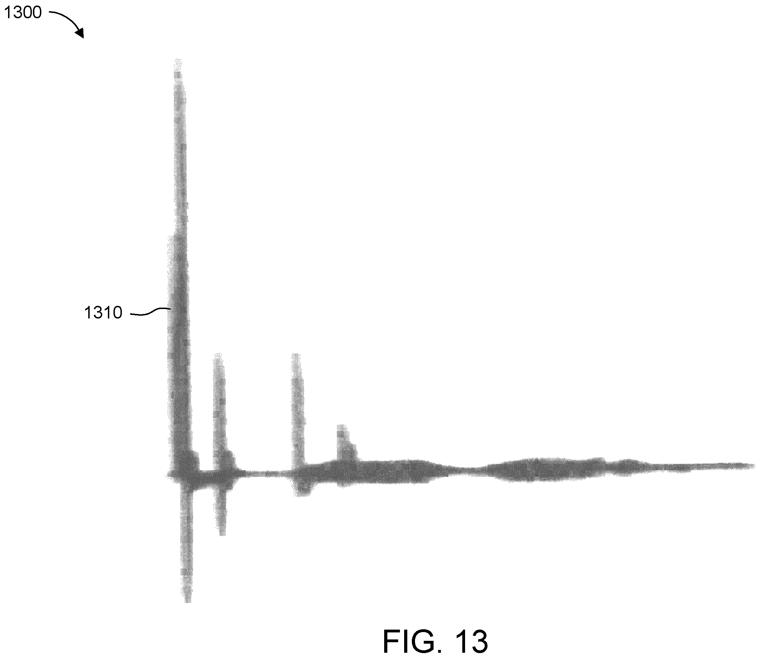

FIG. 13 illustrates a plot 1300 representing an example format signal 1310 representing a representative haptic effect of a click. As can be seen in FIG. 13, signal 1310 includes an initial spike in amplitude followed by a quick dampening of the signal.

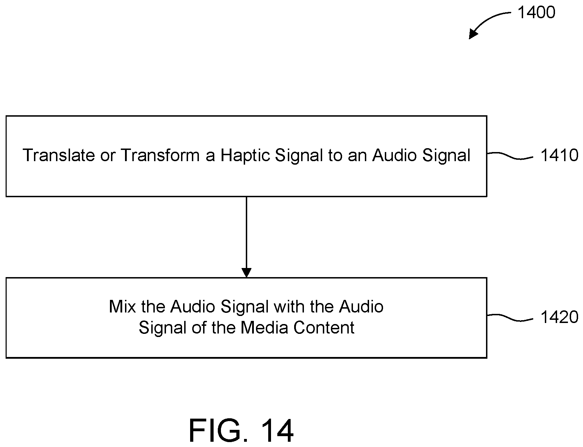

FIG. 14 illustrates a method 1400 of translating (also referred to as transforming) a haptic signal to an audio signal. Method 1400 includes, at 1410 translating (or transforming) a haptic signal to an audio signal. At 1420, method 1400 includes mixing the audio signal with the audio signal of the media content. Similar to the audio to haptic conversion described above, converting haptic signals to audio may be performed. Once the haptic signal is converted to an audio signal, the converted signal may be mixed with the audio signal of the media content or added in an additional audio channel.

Generally method 1400 may be applied to haptic signals, such as PCM, for example. For parametric haptic signals, a synthesis may be performed before mixing. As would be understood, a haptic signal may be a lower frequency as compared to an audio signal, and may even be a lower frequency than the auditive perception threshold. In order to resolve this frequency mismatch, the pitch of the haptic signal may be changed. For example, the haptic signal frequency may be shifted at least to the auditive perception threshold. For instance, if the haptic signal is in the band [0-200Hz], the haptic signal may be shifted to [20Hz-220Hz]. In shifting the haptic signal, the duration and amplitude of the signal are not changed. The maintaining of the amplitude and duration can be adapted to a user profile or to the device type as necessary. Further, when utilizing the frequency shifting, there is not a need to know what haptic effect is being created.

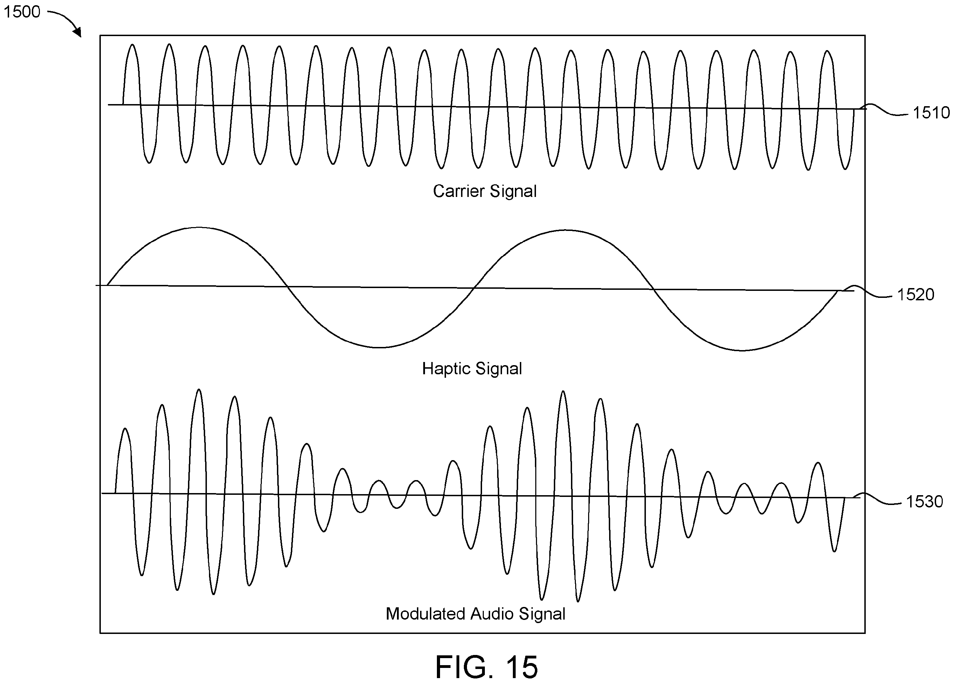

FIG. 15 illustrates a diagram 1500 for performing amplitude modulation of an input low frequency haptic signal to a higher frequency audio signal. In a more complex conversion, some advanced modulation techniques, including one of amplitude and frequency, may be utilized to translate the low frequency band signal to a higher one. In FIG. 15, a carrier signal 1510 may be at a higher frequency as compared to a haptic signal 1520. The carrier signal 1510 and haptic signal 1520 may be combined using amplitude modulation to produce a modulated audio signal 1530. Although not shown n FIG. 15, noise may be added on higher frequencies for a more realistic audio rendering. In addition, if the type of haptic effect is known the haptic effect may enable an additional audio effect to be added, such for ambient effects some reverb could be added to make the audio more immersive, for example.

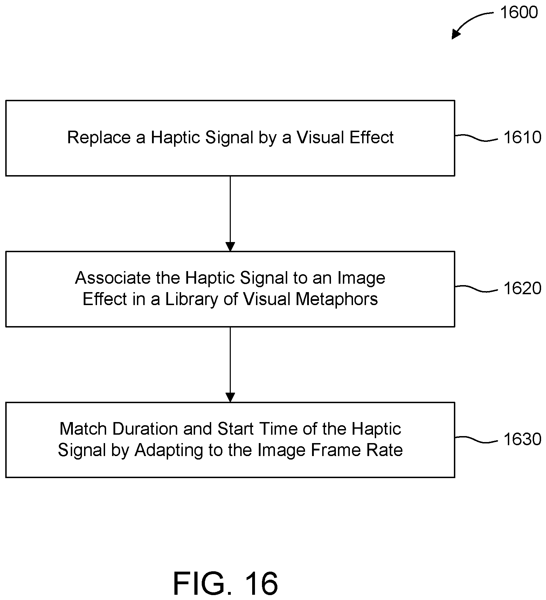

FIG. 16 illustrates a method 1600 of replacing a haptic signal with a visual effect. Method 1600 includes, at 1610 replacing a haptic signal by a visual effect. At 1620, method 1600 includes associating the haptic signal to an image effect in a library of visual metaphors. As with other examples described above, a library of visual metaphors can be designed to associate haptic effects to image effects. The visual effect can be global on the image or local depending on the rendering capabilities (i.e. if only the 2D image is available only global transform can be done, but if a 3D scene is used all objects are known). In the case of contextual or ambient effects, Table 2 provides a sampling of visual effects. This is not exhaustive and can be extended with creatives and alternatives as would be understood.

**Table 2: Sampling of Visual Effects**

| Haptic effect | Visual effect |
|---|---|
| Earthquake | Shaking the image |
| Explosion | Saturating image luminance |
| | one move of the image |
| | zoom in-out |
| touching the user | Move the image |
| | Zoom in-out |
| Motion | zoom in-out |
| click or touch | Change color of the object touched |
| Temperature | Change color saturation |
| Hardness of an object | Change speed of the interface with the object (cursor or virtual hand for instance) |
| ... | ... |

At 1630, method 1600 includes matching the duration and start time of the haptic signal by adapting to the image frame rate.

When the receiver decodes a haptic effect and cannot play the haptic effect, for whatever reason, the receiver may replace the haptic feedback with the corresponding visual effect on the image. The duration and start time may be matched to be the same as the original haptic effect or adapted to the image frame rate to be visible (typically if the effect duration is less than 50/60ms, visible means between 2 frames to make it so the effect is not easily seen, thus an extension to at least a few frames may be used). This translation to visual effect may be application specific or defined by an appropriate format (extensions to MPEG for instance).

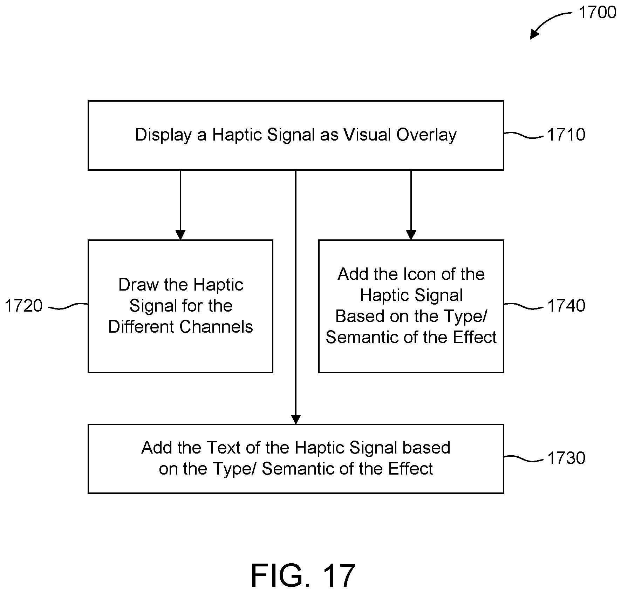

FIG. 17 illustrates a method 1700 of displaying a haptic signal as a visual overlay. Method 1700 includes, at 1710, displaying a haptic signal as a visual overlay using one of a myriad of additional methods. On such method, at 1720, method 1700 including drawing the haptic signal for different channels. On such method, at 1730, method 1700 includes adding the text of the haptic signal based on the type/semantic of the effect. On such method, at 1740, method 1700 includes adding the icon of the haptic signal based on the type/semantic of the effect. In effect, method 1700 may provide a closed captioning of the haptic signal.

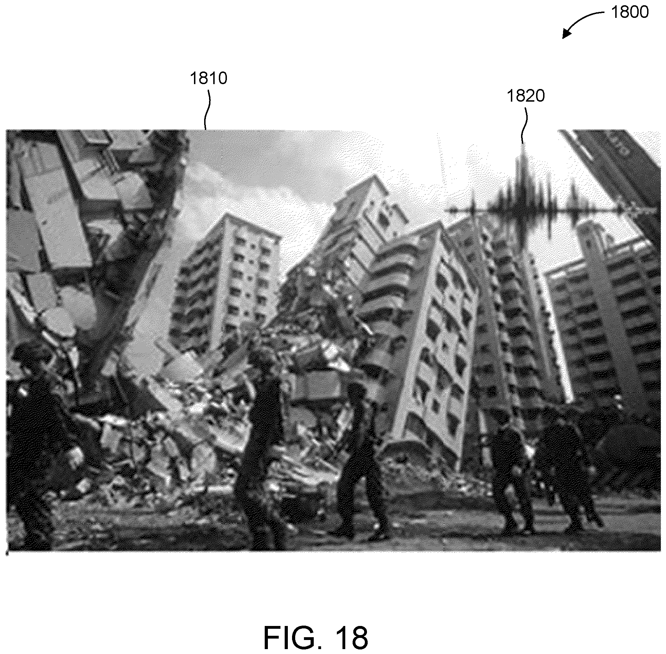

When the type of effect is not known or when the receiver processing power is too low to process an image or create a sound, an overlay may be added to describe the haptic effect. For example, as illustrated in FIG. 18, which illustrates an image 1800 depicting a scene 1820 with a signal 1820 drawn to show the haptic signal 1820 on the image of an earthquake 1810. In this example, the signals for the different channels may be provided.

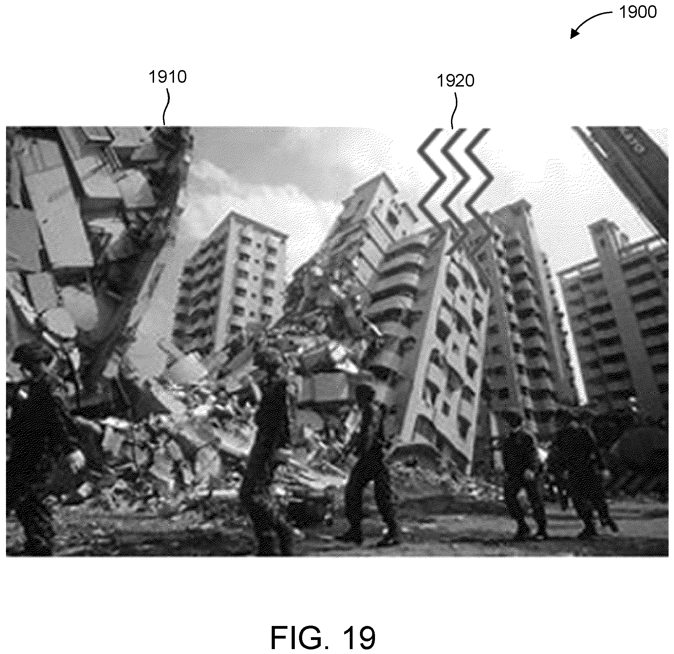

FIG.19 illustrates an image 1900 depicting a scene 1910 with a type/semantic 1920 of the effect provided in the image 1900 to illustrate the effect of an earthquake 1920. If the type/semantic 1920 of the effect is known, then type/semantic 1920 may be added to the image 1900 as a selected icon.

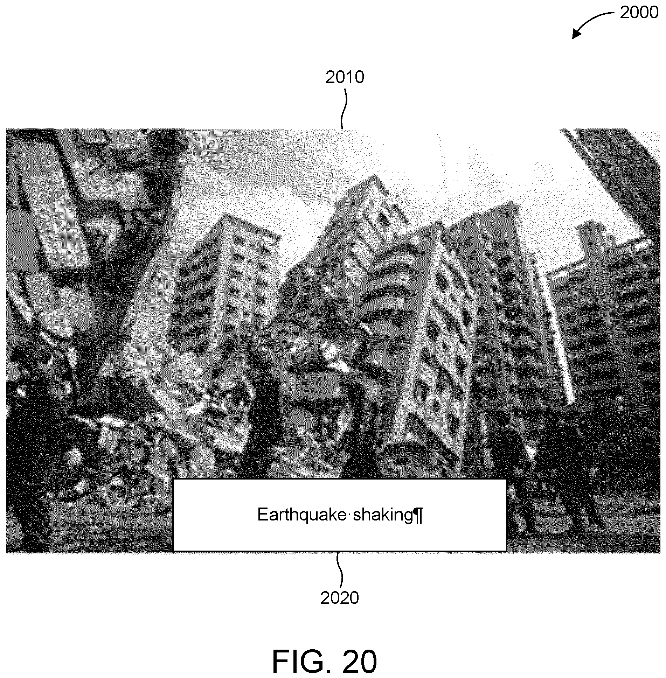

FIG.20 illustrates an image 2000 depicting a scene 2010 with a type/semantic 2020 of the effect provided in the image 2000 to illustrate the effect of an earthquake 2020. If the type/semantic 2020 of the effect is known, then type/semantic 2020 may be added to the image 2000 as text, such as for subtitling, for example.

Additionally, or alternatively, the various methods may be combined. Within method 5400 of FIG. 4, which illustrates a method that may be performed within haptic codec architecture to covert the haptic effect to an audio or video effect, method 500, method 1400, method 1600, and method 17 may combined in various ways. Method 500 of FIG. 5 for replacing a haptic effect with an audio signal reflecting the haptic effect may be combined with one or more of method 1400 of FIG. 14 for translating a haptic signal to an audio signal, method 1600 of FIG. 16 for replacing a haptic effect with a visual effect, and/or method 1700 of FIG. 17 for displaying a haptic signal as a visual overlay, for example.

The described systems, methods and devices may be used in haptic devices/applications/services. The described systems, methods and devices may be an additional value for solutions using the MPEG-I Haptics standard, aka ISO/IEC 23090-31: Haptics Coding or any other defined haptic file format.

The described systems, methods and devices convert and replace a haptic effect with a sound or visual effect. The haptic effect may be associated with a sound or a visual effect, in a library of effect. The haptic effect may be a MPEG formats (descriptive or PCM) or another format (AHAP, IVS). The designed sound/visual effect may be representative of the encoded haptic effect. The duration and amplitude may be the same as the original haptic effect or adapted to fit with the original duration. When the effect is too complicated or unknown, the effect may be ignored. The effect may be created either from a recorded audio signal or directly created synthetically (using available editing tools), and as done in the cinema industry. Alternatively, the haptic signal may be processed, changing to audio and adapting audio properties (pitch, gain, reverb, delay...). Image processing may be used to change the original image/video according to the haptic effect and event created. Overlay of information may be added to signal some haptic feedback. Sound and visual effects may be used together.

The MPEG Haptics coding standard can be extended to add audio and visual effects with the current semantic grammar defined in the ISO/IEC 23090-31 specification (effect library). The sound or visual effect may begin at the same time as the original haptic effect and the duration may be the same. In an alternative, the duration can be changed, but may be more difficult to conserve the original artistic intent.

The technique can be used not only to replace a missing haptic device, but also to enhance/highlight the haptic experience (i.e., in addition to the haptic feedback).

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to MPEG-I, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method of converting a haptic to a pseudo-haptic, the method comprising:
determining that an application does not have a haptic device associated with the haptic;
converting a haptic track of the associated haptic to another track associated with an output configured with the application; and
providing the converted track to a compatible output device.

2. A codec comprising:
a haptic synthesizer operating to:
determine that an application does not have a haptic device associated with the haptic;
convert a haptic track of the associated haptic to another track associated with an output configured with the application; and
provide the converted track to a compatible output device.

3. The method of claim 1 or the codec of claim 2, wherein a minimum sampling rate of the converted haptic track is determined based on input from a user.

4. The method of claim 1 or the codec of claim 2, wherein the converting the haptic track of the associated haptic to another track includes another track comprising at least one of a second haptic track, an audio track, and a video track..

5. The method of claim 1 or the codec of claim 2, wherein the compatible output device is at least one of a haptic device, speaker and display.

6. The method of claim 1 or the codec of claim 2, wherein the converting the haptic track of the associated haptic to another track includes determining a sound corresponding to the haptic effect in the haptic track..

7. The method of claim 6 or the codec of claim 6, wherein an audio signal of the determined sound is mixed with a signal of a media content.

8. The method of claim 6 or the codec of claim 6, wherein an audio signal of the determined sound is added using an additional audio channel.

9. The method of claim 1 or the codec of claim 2, wherein the converting of the haptic track includes translating a haptic signal of the haptic track to an audio signal.

10. The method of claim 1 or the codec of claim 2, wherein the converting of the haptic track includes associating a haptic signal of the haptic track to an image effect in a library of visual metaphors.

11. The method of claim 10 or the codec of claim 10, wherein the image effect is matched in duration and start time with the haptic signal by adapting an image frame rate.

12. The method of claim 1 or the codec of claim 2, wherein the converting of the haptic track includes displaying the haptic signal of the haptic track as a visual overlay.

13. The method of claim 12 or the codec of claim 12, wherein the visual overlay is a drawing of the haptic signal.

14. The method of claim 12 or the codec of claim 12, wherein the visual overlay includes an icon of the haptic signal added based on a semantic of an effect.

15. The method of claim 12 or the codec of claim 12, wherein the visual overlay includes a textual representation of the haptic signal based on a semantic of an effect.
